# EUROPÄISCHE PATENTANMELDUNG

(11) **EP 4 559 682 A1**
(43) Veröffentlichungstag der Anmeldung: **28.05.2025**
(21) Anmeldenummer: 24213994.7
(22) Anmeldetag: 19.11.2024
(51) Int. Cl.: B41F 33/00, B41J 11/00, B65H 26/00, G01N 21/00, G03G 5/00, H04N 1/00

(54) **VERFAHREN ZUM INLINE-REGELN EINES DRUCKPARAMETERS**

(30) Priorität: 24.11.2023 DE 102023132866
(71) Anmelder: manroland Goss web systems GmbH, 86153 Augsburg (DE)
(72) Erfinder: Fejfar, Florian, 81476 München (DE)

(57) **Zusammenfassung**

Die Erfindung betrifft ein Verfahren zum Inline-Regeln eines Druckparameters, wobei zum Regeln des Druckparameters in nacheinander produzierten Druckexemplaren und/oder bei einer jeden Druckzylinderüberrollung in einem jeden Erfassungsbereich eine Druckmarke mittels einer Erfassungseinrichtung erfasst und von jeder erfassten Druckmarke jeweils ein Einzeldruckparameter ermittelt wird, wobei als Regelgröße entweder jeder Einzeldruckparameter oder ein erster Durchschnittswert aus einer ersten Anzahl n1 von Einzeldruckparametern oder ein zweiter Durchschnittswert aus einer zweiten Anzahl n2 von Einzeldruckparametern verwendet wird.

Der Erfindung liegt somit die Aufgabe zugrunde, eine Lösung zu schaffen, mit welcher abhängig vom jeweiligen Betriebszustand der Druckmaschine eine hohe Regeldynamik und somit eine Reduzierung der Einrichtezeit und des Makulaturanfalles oder eine hohe Regelgenauigkeit und somit eine gleichbleibend hohe Produktqualität sicherzustellen.

Die Aufgabe wird erfindungsgemäß dadurch gelöst, dass während einer Druckproduktion als Regelgröße zwischen dem Einzeldruckparameter und dem ersten Durchschnittswert und/oder dem zweiten Durchschnittswert und/oder zwischen dem ersten Durchschnittswert und dem zweiten Durchschnittwert gewechselt wird.

## Beschreibung

Die Erfindung betrifft ein Verfahren zum Inline-Regeln eines Druckparameters, wobei zum Regeln des Druckparameters in nacheinander produzierten Druckexemplaren und/oder bei einer jeden Druckzylinderüberrollung in einem jeden Erfassungsbereich eine Druckmarke mittels einer Erfassungseinrichtung erfasst und von jeder erfassten Druckmarke jeweils ein Einzeldruckparameter ermittelt wird, wobei als Regelgröße entweder jeder Einzeldruckparameter oder ein erster Durchschnittswert aus einer ersten Anzahl von Einzeldruckparametern oder ein zweiter Durchschnittswert aus einer zweiten Anzahl von Einzeldruckparametern verwendet wird.

Bei Druckmaschinen, bei welchen nacheinander Druckbilder auf ein bahnförmiges oder bogenförmiges Substrat gedruckt werden, sind Inline-Regelsysteme zur Regelung eines Druckparameters wie Farbdichte, Farbregister oder das Schnittregister hinlänglich bekannt. Derartige Inline-Regelsysteme erfassen auf das Substrat aufgedruckte Marken und ermitteln von jeder einzelnen aufgedruckten Marke einen Einzeldruckparameter. Dies kann beispielsweise ein Farbdichtewert, ein Farbwert, ein Farbregisterwert oder ein Schnittregisterwert oder ein Farbton einer aufgedruckten Farbmarke einer verwendeten Druckfarbe sein.

Zur getakteten Regelung des Druckparameters wie beispielsweise der Farbdichte werden die derart ermittelten Druckparameter als Regelgröße verwendet. Hierbei ist aus dem Stand der Technik bekannt, dass jeder ermittelte Einzeldruckparameter nach seinem Vorliegen der Regelung getaktet als Regelgröße zugeführt wird. Bei der Berücksichtigung eines jeden Einzeldruckparameters als Regelgröße ist zwar eine hohe Regeldynamik und somit eine schnelle Regelung des Druckparameters möglich, allerdings können Schwankungen oder Ausreißer eines Einzeldruckparameters, welche beispielsweise durch eine punktuell schlechtere Farbannahme des Bedruckstoffes verursacht sein können, zu einem instabilen Regelverhalten führen, da derartige deutliche Abweichungen der Regelgröße vom Sollwert eine hohe Regelabweichung verursachen.

Zur Vermeidung der vollumfänglichen Berücksichtigung derartiger einzelner Ausrei-ßer der Einzeldruckparameter sind aus dem Stand der Technik Lösungen bekannt, dass nicht jeder ermittelte Einzeldruckparameter einer erfassten Druckmarke als Regelgröße verwendet wird, sondern dass aus einer Mehrzahl nacheinander ermittelter Einzeldruckparameter ein Durchschnittswert ermittelt wird. So kann beispielsweise aus den ermittelten Einzeldruckparametern von drei nacheinander erfassten Druckmarken ein Durchschnittswert gebildet werden, welcher als Durchschnittswert der Regelung als Regelgröße zugeführt wird. Es ist auch möglich, den Durchschnitt aus mehr als drei Einzeldruckparametern zu bilden. Je größer die Anzahl der bei einem Durchschnittswert verwendeten Einzeldruckparameter ist, desto besser werden einzelne Ausreißer kompensiert, andererseits wird dadurch die Regeldynamik verlangsamt.

Die Regeldynamik ist jedoch entscheidend, wie schnell die Regelung den entsprechenden Druckparameter ausregelt, so dass dieser möglichst schnell den vorgegebenen Sollwert erreicht. Die Anforderungen an die Regeldynamik sind bei Betriebszuständen mit höheren oder einer Mehrzahl von Störgrößen höher, was beispielsweise dem Betriebszustand des Anfahrens, Andruckens, einer Veränderung der Produktionsgeschwindigkeit oder nach Bahnspannungsschwankungen wie beispielsweise einem Rollenwechsler entspricht, als beim Fortdruckzustand, in welchem normalerweise nur wenige und geringe Störgrößen zu berücksichtigen sind.

Die Festlegung der Anzahl der Einzeldruckparameter, aus welchen ein Durchschnittswert als Regelgröße gebildet wird, ist somit immer eine Abwägung zwischen ausreichender Regeldynamik und sicherzustellender Regelgenauigkeit.

Der Erfindung liegt somit die Aufgabe zugrunde, eine Lösung zu schaffen, mit welcher abhängig vom jeweiligen Betriebszustand der Druckmaschine eine hohe Regeldynamik und somit eine Reduzierung der Einrichtezeit und des Makulaturanfalles oder eine hohe Regelgenauigkeit und somit eine gleichbleibend hohe Produktqualität sicherzustellen.

Die Aufgabe wird erfindungsgemäß dadurch gelöst, dass während einer Druckproduktion als Regelgröße zwischen dem Einzeldruckparameter und dem ersten Durchschnittswert und/oder dem zweiten Durchschnittswert und/oder zwischen dem ersten Durchschnittswert und dem zweiten Durchschnittwert gewechselt wird.

Diese Lösung weist den Vorteil auf, dass für jeden Betriebszustand somit die jeweiligen Anforderungen bezüglich der Regeldynamik einerseits und der Regelgenauigkeit andererseits optimal angepasst werden können. So kann beispielsweise bei Anfahrvorgängen, bei denen in der Regel eine höhere Regeldynamik gefordert ist, als Regelgröße die Einzeldruckparameter oder ein Durchschnittswert einer sehr geringen Anzahl von Einzeldruckparametern verwendet werden, wohingegen in einem stabilen Betriebszustand des Fortdruckes als Regelgröße der Durchschnittswert einer relativ großen Anzahl von Einzeldruckparametern verwendet werden kann, so dass einzelne Ausreißer der Einzeldruckparameter "geglättet" werden und das Regelverhalten nicht unnötig beeinflussen.

Gemäß einer Ausgestaltung der Erfindung wird zwischen dem Einzeldruckparameter und dem ersten Durchschnittswert und/oder dem zweiten Durchschnittswert und/oder zwischen dem ersten Durchschnittswert und dem zweiten Durchschnittwert in Abhängigkeit von einem Betriebszustand der Druckmaschine gewechselt.

Eine derartige Lösung weist den Vorteil auf, dass damit während einer Druckproduktion das Regelverhalten auf die unterschiedlichen Betriebszustände wie beispielsweise den Anfahrvorgang, die Druckabschnitte vor und/oder nach einem Gummituchwaschen oder während und nach Geschwindigkeitsveränderungen angepasst werden kann, um somit das Regelverhalten an die Anforderungen einer hohen Regelungsdynamik einerseits und einem stabilen Regelverhalten bei kontinuierlichen Betriebsparametern angepasst werden kann.

Gemäß einer weiteren Ausgestaltung der Erfindung wird zwischen dem Einzeldruckparameter und dem ersten Durchschnittswert und/oder dem zweiten Durchschnittswert und/oder zwischen dem ersten Durchschnittswert und dem zweiten Durchschnittswert in Abhängigkeit von der Zeit und/oder einer getätigten Überrollungsanzahl der Druckmaschine gewechselt.

Diese Lösung weist den Vorteil auf, dass insbesondere bei standardisierten Produktionsabläufen ein fester Algorithmus verwendet wird, in welchem Produktionsabschnitt welcher Regelungsschwerpunkt, nämlich die Regelungsdynamik einerseits oder eine hohe Regelgüte andererseits, festgelegt wird, ohne derartige Einstellungen beispielsweise dem Bedienpersonal zu überlassen. So kann beispielsweise nach 1000 Zylinderüberrollungen nach Start einer Produktion beispielsweise als Regelgröße auf den ersten Durchschnittswert oder auf den zweiten Durchschnittswert gewechselt werden, wenn davon ausgegangen werden kann, dass nach dieser Produktionsdauer ein sehr stabiler Betriebszustand nach dem Hochfahrvorgang erreicht ist. Der erste Durchschnittswert ist hierbei der Durchschnitt aus einer ersten Anzahl von Einzeldruckparametern, beispielsweise aus drei Einzeldruckparametern. Der zweite Durchschnittswert ist hierbei der Durchschnitt aus einer zweiten Anzahl von Einzeldruckparametern, beispielsweise aus fünf oder mehr Einzeldruckparametern.

Gemäß einer weiteren Ausgestaltung der Erfindung wird ausschließlich und/oder zusätzlich abhängig von einer Abweichung zwischen dem ersten Einzeldruckparameter und dem zweiten Einzeldruckparameter oder abhängig von einer Abweichung zwischen dem ersten ersten Durchschnittswert und dem zweiten ersten Durchschnittswert und/oder abhängig von einer Abweichung zwischen einem ersten zweiten Durchschnittswert und einem zweiten zweiten Durchschnittswert gewechselt.

Diese Ausgestaltung weist den Vorteil auf, dass abhängig von der Abweichung der Regelgrößen zueinander unterschieden wird, ob ein Regelungsverhalten mit hoher Regelungsdynamik oder ein Regelungsverhalten mit hoher Regelungsgüte verwendet wird. So kann beispielsweise bei entsprechend großer Abweichung nacheinander ermittelter Einzeldruckparameter oder nacheinander ermittelter Durchschnittswerte aus einer sehr geringen Anzahl von Einzelruckparametern zur Erzielung einer hohen Regelungsdynamik verwendet werden, um die relativ großen Differenzen sehr zügig ausgleichen zu können.

Bei entsprechend kleinen Abweichungen nacheinander ermittelter Einzeldruckparameter oder nacheinander ermittelter Durchschnittswerte aus einer sehr geringen Anzahl von Einzelruckparametern kann jedoch bevorzugt zur Erzielung einer hohen Regelungsgüte ein Durchschnittswert aus einer relativ großen Anzahl von Einzeldruckparametern verwendet werden, da der stabile Zustand keine hohe Regelungsdynamik erfordert. Ein derart selbstlernendes System passt sich somit den unterschiedlichen Produktionszuständen selbständig an.

Bevorzugte Weiterbildungen der Erfindung ergeben sich aus den Unteransprüchen und der nachfolgenden Beschreibung. Verschiedene Ausführungsbeispiele der Erfindung werden, ohne hierauf beschränkt zu sein, an Hand der Zeichnungen näher erläutert. Dabei zeigt:
- Fig. 1: Einen Ausschnitt einer Druckmaschine mit einer Erfassungseinrichtung
- Fig. 2: Ein beispielhafter Ausschnitt aus einer bedruckten Bedruckstoffbahn mit entsprechenden Druckmarken
- Fig. 3: Eine Mehrzahl von über die Zeit ermittelte Einzeldruckparameter
- Fig. 4: Eine Mehrzahl von über die Zeit ermittelte Einzeldruckparameter mit ermittelten ersten Durchschnittswerten
- Fig. 5: Eine Mehrzahl von über die Zeit ermittelte Einzeldruckparameter mit ermittelten zweiten Durchschnittswerten
- Fig. 6: Eine beispielhafte Druckproduktion mit Einteilung dieser in unterschiedliche Produktionsbereiche

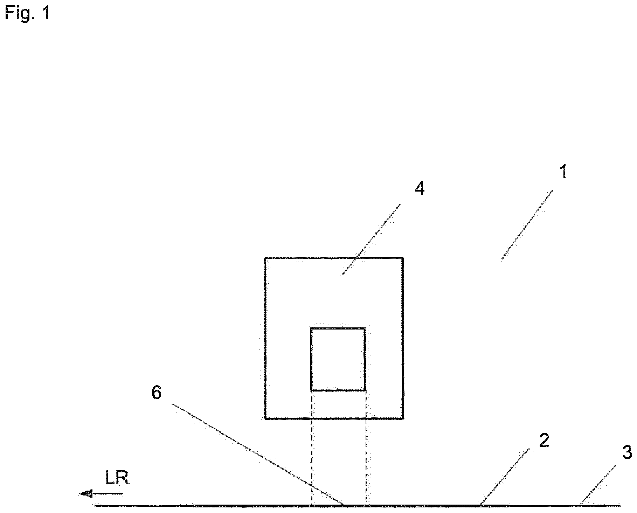

Fig. 1 zeigt einen Ausschnitt aus einer Druckmaschine 1 mit einer symbolisch dargestellten Erfassungseinrichtung 4. Die Erfassungseinrichtung 4 ist in Laufrichtung LR der Druckexemplare 2 stromabwärts der mindestens einen in Fig. 1 nicht dargestellten Druckeinheit angeordnet und erfasst zumindest Teile des auf die in Fig. 1 beispielhaft dargestellte Substratbahn 3 aufgedruckte Druckbild. Die durch die Erfassungseinrichtung 4 erfassten Teile der Substratbahn 3 und somit der Druckexemplare 2 können speziell definierte Teile des Druckbildes sein, oder es wird mindestens eine speziell ausgestaltete Druckmarke 6 erfasst, wie dies aus dem Stand der Technik hinlänglich bekannt ist. Die vorliegende Erfindung ist hierbei auf die bekannten Druckverfahren anwendbar.

Wenngleich die vorliegende Erfindung nachfolgend beispielhaft an einer bedruckten Substratbahn 3 erläutert wird, so ist es auch möglich, die vorliegende Erfindung auf Bogendruckmaschinen anzuwenden, bei welchen als Druckexemplare 2 nacheinander bereits vereinzelte Substratbögen bedruckt werden.

Wenngleich die vorliegende Erfindung nachfolgend beispielhaft anhand von speziell für die Ermittlung der Einzeldruckparameter 7 aufgedruckten Druckmarken 6 erläutert wird, so ist es auch möglich, die Einzeldruckparameter 7 ohne mindestens eine entsprechende Druckmarke 6, sondern an spezifizierten Stellen des Druckbildes zu ermitteln, wie dies unter dem Stichwort "Messen im Bild" aus dem Stand der Technik hinlänglich bekannt ist.

Folglich steht der Begriff der Druckmarke 6 im Rahmen dieser Erfindung sowohl für eine separat auf ein Druckexemplar 2 oder auf ein Substrat aufgedruckte Marke zur Erfassung eines Druckparameters als auch im Falle des Messens im Bild für den mindestens einen Bereich des Druckbildes eines Druckexemplars 2, welcher zur Bestimmung des mindestens einen Druckparameters 7 geeignet ist oder hierfür verwendet wird.

Aus dem Stand der Technik sind Druckparameter bekannt, welche in einem Erfassungsbereich 5 anhand einer einzigen Druckmarke 6 - oder einem in der vorliegenden Anmeldung hiermit gleichgesetztem Bereich des Druckbildes - erfasst oder ermittelt werden können, wie beispielsweise die Farbdichte für eine Druckfarbe. Denn für die Ermittlung der Farbdichte einer Druckfarbe in einem Erfassungsbereich 5, was beispielsweise einer Farbzone im Falle von Offsetdruckwerken entspricht, ist eine einzige Druckmarke 6 ausreichend. Gleiches gilt für die Erfassung des Farbregisters als Druckparameter, bei welcher je Druckfarbe eine Druckmarke 6 grundsätzlich ausreichend ist.

Wenngleich es möglich oder erforderlich ist, dass ein Druckparameter wie beispielsweise der Fan-Out-Effekt mittels einer Mehrzahl von Druckmarken 6 ermittelt werden kann oder ermittelt werden muss, so wird in der nachfolgenden Beschreibung dem besseren Verständnis und der Einfachheit halber immer nur der Begriff einer Druckmarke 6 verwendet, auch wenn diese wie am Beispiel einer Fan-Out-Druckmarke über die Substratbreite mehrere Teile aufweist.

Der Erfassungsbereich 5 ist der Bereich, in welchem ein Druckparameter verstellbar ist. Dies ist bei Offset-Druckeinheiten in der Regel die Breite einer entsprechenden Farbzone, die der Breite eines Farbmessers entspricht. Aber abhängig von dem betrachteten Druckparameter kann dies auch die gesamte Substratbreite sein, wie beispielsweise beim Farbregister oder beim Schnittregister, da diese Druckparameter über die volle Breite des Substrats betrachtet werden.

Die anhand der mindestens einen Druckmarke 6 ermittelten Druckparameter wie beispielsweise die Farbdichte beziehungsweise der Farbdichtewert einer Druckfarbe, das Farbregister beziehungsweise der Farbregisterwert im Sinne der Abweichung der Lage einer Druckfarbe zur Solllage, der Schnittregisterwert im Sinne der Abweichung eines Schnittes zu seiner Sollposition, der Fan-Out-Effekt resultierend aus einer Veränderung der Bahnbreite durch den Druckprozess, der Farbton einer Druckfarbe werden zur Regelung dieses Druckparameters einem aus dem Stand der Technik bekannten Regelkreis als Regelgröße zugeführt, so dass der entsprechende Druckparameter möglichst auf seinen Sollwert eingeregelt wird.

Wenngleich das erfindungsgemäße Verfahren grundsätzlich für die Regelung aller Druckparameter anwendbar ist, so wird das Verfahren nachfolgend beispielhaft ausschließlich anhand der Regelung der Farbdichte einer beim Druckprozess eingesetzten Druckfarbe erläutert.

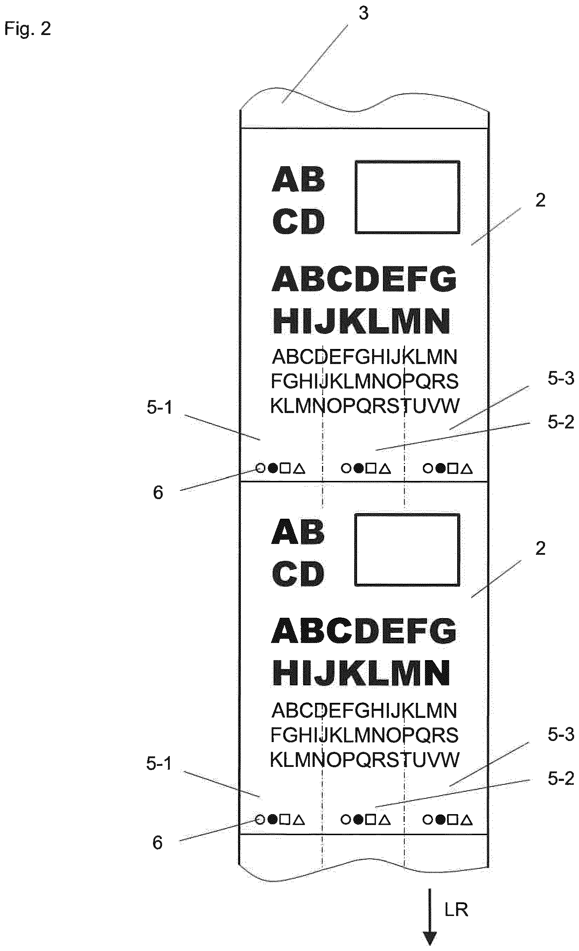

Fig. 2 zeigt einen Ausschnitt einer mit zwei Druckexemplaren 2 bedruckten Substratbahn 3. Die beiden nacheinander produzierten und noch nicht vereinzelten Druckexemplare 2 weisen ein Druckbild auf, welches auch an einem Ende eines jeden Druckexemplars 2 Druckmarken 6 umfasst. Die Substratbahn 3 ist beispielhaft in drei Erfassungsbereiche 5 unterteilt, nämlich einen ersten Erfassungsbereich 5-1, einen zweiten Erfassungsbereich 5-2 und einen dritten Erfassungsbereich 5-3. Ein Erfassungsbereich 5 kann beispielsweise die Breite einer Farbzone sein, in welcher die zugeführte Farbmenge einer Druckfarbe unabhängig von der zugeführten Farbmenge in einem anderen Erfassungsbereich 5 verändert werden kann. Somit muss jedoch in jedem Erfassungsbereich 5 die Farbdichte einer jeden Druckfarbe getrennt ermittelt werden.

Bei der Verwendung von vier Druckfarben, welche für den farbigen Druck in der Regel erforderlich sind, werden somit in jedem Erfassungsbereich 5 vier Druckmarken 6 verwendet, nämlich eine für jede Druckfarbe. Bei dem in Fig. 2 dargestellten Beispiel sind in jedem Erfassungsbereich 5 vier Druckmarken 6 untergebracht, die sinngemäße Zuordnung einer jeden Druckmarke 6 zu einer Druckfarbe ist durch unterschiedliche Formen und/oder durch unterschiedliche Füllungen dargestellt.

Diese Druckmarken 6 werden in Laufrichtung LR der Substratbahn 3 stromabwärts der in Fig. 2 nicht dargestellten Druckstelle von einer in Fig. 2 nicht dargestellten Erfassungseinrichtung 4 erfasst, so dass die Farbdichte für eine jede Druckfarbe in einem jeden Erfassungsbereich 5-1, 5-2, 5-3 ermittelt wird. Die Erfassung der Druckmarken 6 in den jeweiligen Erfassungsbereichen 5-1, 5-2, 5-3 kann hierbei vorzugsweise gleichzeitig erfolgen, was eine besonders hohe Regelungsgeschwindigkeit ermöglicht, es können die Druckmarken 6 jedoch auch sequentiell über die Breite der Substratbahn 3 erfasst werden.

Nachfolgend wird die Erfindung anhand der in Fig. 2 mit Bezugszeichen 6 gekennzeichneten Druckmarke 6 einer Druckfarbe in dem ersten Erfassungsbereich 5-1 erläutert. Das hierbei erläuterte Verfahren ist folglich auch für die Druckmarken 6 der anderen Druckfarben in dem ersten Erfassungsbereich 5-1 als auch auf alle anderen Druckfarben in den restlichen Erfassungsbereichen 5-2 und 5-3 zu übertragen.

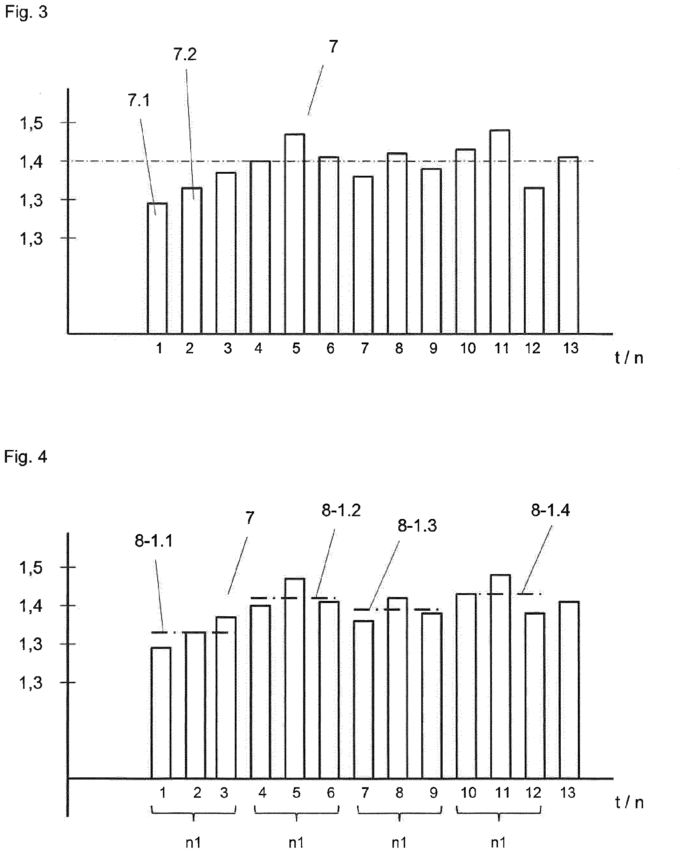

Fig. 3 zeigt die für die in Fig. 2 als Druckmarke 6 in dem ersten Erfassungsbereich 5-1 ermittelte Einzeldruckparameter 7 am Beispiel des Farbdichtewertes, wobei die Einzeldruckparameter 7 über die Zeit t oder über die Anzahl der Zylinderüberrollungen n oder über die Anzahl n der Druckexemplare 2 aufgetragen ist. Der besseren Erläuterung wegen ist ein jeder Einzeldruckparameter 7 auf der Abszissenachse nummeriert, um die einzelnen Einzeldruckparameter 7 besser erläutern zu können. Die Ordinatenachse ist in ihrem Maßstab skaliert und zeigt nur den Bereich zwischen 1,3 und 1,5. Die hierbei dargestellten Abweichungen sind somit mit dem blo-ßen Auge nicht zwingend wahrnehmbar und sind somit auch zur Darlegung der Erfindung rein beispielhaft dargestellt. Der Sollwert des Druckparameters ist in Fig. 3 beispielhaft mit 1,4 angenommen.

Die Einzeldruckparameter 7 weichen voneinander ab, was sowohl im Regelverhalten als auch im Farbannahmeverhalten des Substrats begründet sein kann. Die Druckparameter mit den Ziffern 1 bis 5 nehmen stetig zu, was beispielsweise die Folge eines Einregelvorganges dieses Einzeldruckparameters 7 sein kann oder während und/oder nach einer Erhöhung der Druckgeschwindigkeit erfolgen kann, bis die erforderliche Farbmenge wieder auf die höhere Bahngeschwindigkeit eingeregelt wurde.

Für einen Fachmann ist somit ersichtlich, dass die Verwendung eines jeden individuellen Einzeldruckparameters 7 als Regelgröße aufgrund der Schwankungen zu einem relativ instabilen Regelverhalten führt, es sei denn, man beabsichtigt eine sehr hohe Regeldynamik zur schnellen Einregelung auf den Sollwert.

Deshalb ist aus dem Stand der Technik eine Lösung bekannt, wie diese in Fig. 4 dargestellt ist, wonach nicht jeder Einzeldruckparameter 7 als Regelgröße verwendet wird, sondern bei welchem man als Regelgröße einen ersten Durchschnittswert 8-1 aus einer ersten Anzahl n von nacheinander ermittelten Einzeldruckparametern 7 verwendet. Bei dem in Fig. 4 dargestellten Beispiel der Einzeldruckparameter 7 aus Fig. 3 beträgt die erste Anzahl n1 drei, die sich daraus ergebenden ersten Durchschnittswerte 8-1.1, 8-1.2, 8-1.3 und 8-1.4 unterscheiden sich somit nicht mehr so stark voneinander, so dass hierdurch leichter eine stabile Regelung ermöglicht wird, da einzelne größere Abweichungen zwischen den einzelnen Einzeldruckparametern 7 ausgeglichen werden.

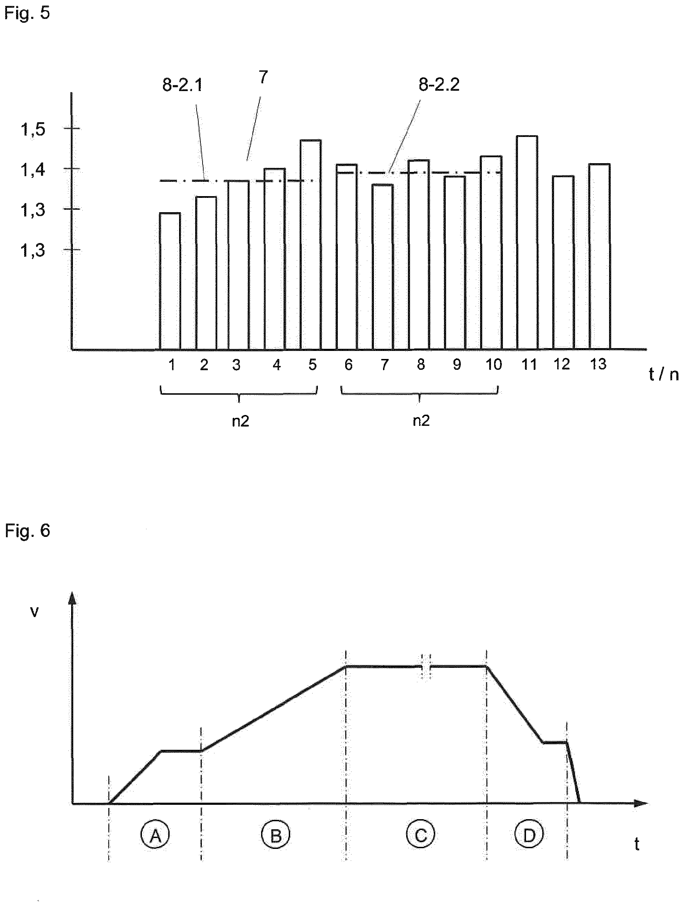

Fig. 5 zeigt ein Beispiel mit denselben Einzeldruckparametern 7 aus den Figuren 3 und 4, wobei jedoch aus einer zweiten Anzahl n2, welche sich von der ersten Anzahl n1 aus Fig. 4 unterscheidet, zweite Durchschnittswerte 8-2.1 und 8-2.2 gebildet werden. Bei dem in Fig. 5 dargestellten Beispiel beträgt die zweite Anzahl n2 beispielhaft 5, weshalb nur der erste zweite Durchschnittswert 8-2.1 für die Einzeldruckparameter 7 mit den Nummern 1 bis 5 und der zweite zweite Durchschnittswert 8-2.2 für die Einzeldruckparameter 7 mit den Nummern 6 bis 10 dargestellt ist.

Wie der Vergleich der Fig. 4 und 5 zeigt, ändert sich durch Veränderung der Anzahl n der Durchschnittswert 8, weshalb grundsätzlich gilt, dass mit einer größeren Anzahl n zur Bildung des Durchschnittswertes 8 eine größere Glättung der Regelung, damit eine höhere Regelungsgüte aber gleichzeitig eine geringere Regeldynamik erzielt werden kann.

Fig. 6 zeigt einen beispielhaften Verlauf einer Druckproduktion mit den unterschiedlichen Phasen einer Produktion. Auf der Abszissenachse ist die Zeit t aufgetragen, auf der Ordinatenachse ist die Produktionsgeschwindigkeit v aufgetragen.

Die beispielhaft dargestellte Druckproduktion kann grundsätzlich in folgende Bereiche eingeteilt werden:
Bereich A ist der Anfahr- und Einrichtbereich, bei welchem die Druckproduktion gestartet und auch die Farbeinstellung eingerichtet wird. Diese Einstellung der Farbeinstellung, welche in gewissen Grenzen trotz einer Farbvoreinstellung der farbgebenden Elemente erforderlich ist, erfordert somit eine hohe Regeldynamik, um den Sollwert des Druckparameters möglichst schnell zu erreichen, insbesondere auch im Hinblick auf die nicht oder nur teilweise konstante Produktionsgeschwindigkeit in dem Anfahr- und Einrichtbereich A.

Auf den Anfahr- und Einrichtbereich A folgt bei dem in Fig. 6 dargestellten Beispiel der Hochfahrbereich B, bei welchem das Einrichten der Druckmaschine 1 zumindest in dem Maße abgeschlossen ist, als dass in dieser Phase bereits verkaufsfähige Druckprodukte produziert werden können, allerdings ist aufgrund der Erhöhung der Produktionsgeschwindigkeit ein stetes Nachregeln der farbgebenden Elemente erforderlich.

Im Anschluss an den Hochfahrbereich B folgt der Fortdruckbereich C, in welchem die Produktionsgeschwindigkeit im Wesentlichen stabil gehalten wird, so dass in diesem Fortdruckbereich C ebenfalls Gutprodukte produziert werden können. In diesem Fortdruckbereich C sind gegebenenfalls in Fig. 6 nicht dargestellte Druckunterbrechungen wie beispielsweise ein Fortdruckwaschen erforderlich, jedoch erfolgt im Fortdruckbereich vorzugsweise eine unterbrechungsfreie Druckproduktion und somit stabile Produktionsbedingungen mit jedoch sehr hohen Anforderungen an die Druckqualität, was einer sehr hohen Regelgüte und Regelgenauigkeit entspricht.

Bei dem in Fig. 6 gezeigten Beispiel schließt an den Fortdruckbereich C ein Auslaufbereich D, in welchem die Produktionsgeschwindigkeit reduziert wird, wobei dennoch verkaufsfähige Druckprodukte hergestellt werden. Nach Erreichen der geforderten Sollauflage der Druckproduktion wird die Druckmaschine 1 bei dem in Fig. 6 dargestellten Beispiel mit möglichst hoher Verzögerung angehalten, wobei hierbei keine verkaufsfähigen Druckprodukte mehr erzeugt werden können. Optional kann in dem an den Auslaufbereich D angrenzenden Bereich noch ein Auslaufwaschen integriert sein. Hinsichtlich der Regelung des besagten Druckparameters besteht aufgrund der Änderung der Produktionsgeschwindigkeit im Auslaufbereich D jedoch eine höhere Anforderung an die Regelungsdynamik.

In Bezug auf das in Fig. 6 dargestellte Beispiel einer Druckproduktion ist zum Inline-Regeln eines Druckparameters wie beispielsweise der Farbdichte einer Druckfarbe vorteilhaft, dass in jedem Erfassungsbereich 5 in nacheinander produzierten Druckexemplaren 2 und/oder bei einer jeden Zylinderüberrollung eine Druckmarke 6 mittels einer Erfassungseinrichtung 4 erfasst wird, so dass von jeder erfassten Druckmarke 6 jeweils ein Einzeldruckparameter 7 ermittelt wird, wobei als Regelgröße entweder jeder Einzeldruckparameter 7 oder ein erster Durchschnittswert 8-1 aus einer ersten Anzahl n1 von Einzeldruckparametern 7 oder ein zweiter Durchschnittswert 8-2 aus einer zweiten Anzahl n2 von Einzeldruckparametern 7 verwendet wird, und wobei während einer Druckproduktion als Regelgröße zwischen dem Einzeldruckparameter 7 und dem ersten Durchschnittswert 8-1 und/oder dem zweiten Durchschnittswert 8-2 und/oder zwischen dem ersten Durchschnittswert 8-1 und dem zweiten Durchschnittwert 8-2 gewechselt wird.

Bezogen auf das in Fig. 6 dargestellte Beispiel bedeutet dies, dass beispielsweise in dem Anfahr- und Einrichtbereich A aufgrund der dort geforderten hohen Regeldynamik der Druckparameter geregelt wird, indem als Regelgröße die Einzeldruckparameter 7 verwendet werden, wohingegen im Hochfahrbereich B aufgrund der dort bereits erfolgten Einstellung der farbgebenden Elemente der erste Durchschnittswert 8-1 aus den Einzeldruckparametern 7 über eine erste Anzahl n1 wie beispielsweise 2 oder 3 Einzeldruckparameter 7 als Regelgröße verwendet wird, so dass zwar aufgrund der ansteigenden Produktionsgeschwindigkeit v eine noch ausreichend dynamische und dennoch bereits etwas moderatere Regeldynamik sichergestellt ist.

Im Fortdruckbereich C kann aufgrund der dort stabilen Produktionsbedingungen als Regelgröße der zweite Durchschnittswert 8-2 aus einer zweiten Anzahl n2 von Einzeldruckparametern 7 verwendet werden, wie beispielsweise über 5 oder mehr Einzeldruckparameter 7. Hierdurch ist eine sehr hohe Regelgüte gewährleistet.

Sollte der Fortdruckbereich C jedoch unterbrochen werden, beispielsweise durch ein Fortdruckwaschen, so können in dem Bereich unmittelbar nach dem Fortdruckwaschen auch entweder Einzeldruckparameter 7 und/oder der erste Durchschnittswert 8-1 aus einer ersten Anzahl n1 von Einzeldruckparametern 7 als Regelgröße verwendet werden, um die erfolgte Unterbrechung des Fortdruckes möglichst schnell auszuregeln.

Im Auslaufbereich ist wiederum eine höhere Regeldynamik aufgrund der dort erfolgenden Änderung der Druckgeschwindigkeit erforderlich, weshalb in diesem Auslaufbereich D als Regelgröße entweder Einzeldruckparameter 7 oder der erste Durchschnittswert 8-1 verwendet werden.

Als erste Anzahl n1 zur Bildung des ersten Durchschnittswertes 8-1 können grundsätzlich alle ganzen Zahlen größer 2 verwendet werden, wobei die erste Anzahl n1 vorzugsweise in einem Bereich zwischen 2 und 50, besonders bevorzugt in einem Bereich zwischen 2 und 20 liegt.

Als zweite Anzahl n2 zur Bildung des ersten Durchschnittswertes 8-1 können grundsätzlich alle ganzen Zahlen größer 2 verwendet werden, wobei die zweite Anzahl n2 vorzugsweise in einem Bereich zwischen 2 und 100, besonders bevorzugt in einem Bereich zwischen 5 und 50 liegt, wobei die zweite Anzahl n2 von der ersten Anzahl n1 abweichend ist, vorzugsweise ist die zweite Anzahl n2 größer als die erste Anzahl n1.

Es ist ferner auch möglich, dass während einer Druckproduktion sowohl der erste Durchschnittswert 8-1 und/oder der zweite Durchschnittswert 8-2 als Regelgröße verwendet wird, wobei während einer Druckproduktion die erste Anzahl n1 und/oder die zweite Anzahl n2 in ihrem Wert verändert wird.

Es ist auch möglich, dass zwischen dem Einzeldruckparameter 7 und dem ersten Durchschnittswert 8-1 und/oder dem zweiten Durchschnittswert 8-2 und/oder zwischen dem ersten Durchschnittswert 8-1 und dem zweiten Durchschnittwert 8-2 in Abhängigkeit von einem Betriebszustand der Druckmaschine 1 gewechselt wird.

Dieser Wechsel kann manuell durch das Bedienpersonal erfolgen, es ist jedoch auch möglich, dass in Betriebszuständen, in denen verkaufsfähige Produkte hergestellt werden, automatisch nur der erste Durchschnittswert 8-1 oder der zweite Durchschnittwert 8-2, nicht jedoch die Einzeldruckparameter 7 als Regelgröße verwendet werden, oder dass während und unmittelbar nach einer Änderung der Produktionsgeschwindigkeit automatisch der erste Durchschnittswert 8-1 oder Einzeldruckparameter 7, nicht jedoch der zweite Durchschnittswert 8-2 als Regelgröße verwendet wird.

Ferner ist es auch möglich, dass zwischen dem Einzeldruckparameter 7 und dem ersten Durchschnittswert 8-1 und/oder dem zweiten Durchschnittswert 8-2 und/oder zwischen dem ersten Durchschnittswert 8-1 und dem zweiten Durchschnittswert 8-2 in Abhängigkeit von der Zeit und/oder einer getätigten Überrollungsanzahl der Druckmaschine 1 gewechselt wird.

Insbesondere bei hoch standardisierten Produktionsabläufen ist es möglich, nach einer festgelegten Anzahl von Zylinderüberrollungen oder produzierten Druckexemplaren 2 zwischen den Einzeldruckparametern 7 oder dem ersten Durchschnittswert 8-1 oder dem zweiten Durchschnittswert 8-2 als Regelgröße zu wechseln.

Auch ist es möglich, dass ausschließlich und/oder zusätzlich abhängig von einer Abweichung zwischen dem ersten Einzeldruckparameter 7.1 und dem zweiten Einzeldruckparameter 7.2 oder abhängig von einer Abweichung zwischen dem ersten ersten Durchschnittswert 8-1.1 und dem zweiten ersten Durchschnittswert 8-1.2 und/oder abhängig von einer Abweichung zwischen einem ersten zweiten Durchschnittswert 8-2.1 und einem zweiten zweiten Durchschnittswert 8-2.2 gewechselt wird.

Bezogen auf die Figuren 3 bis 5 bedeutet dies, dass die Abweichungen zwischen aufeinanderfolgenden Einzeldruckparametern 7, beispielsweise zwischen dem ersten Einzeldruckparameter 7.1 und dem zweiten Einzeldruckparameter 7.2 bestimmt werden, um die Gleichmäßigkeit der Einzeldruckparameter 7 zu ermitteln. Die zur Ermittlung der Differenz herangezogenen Einzeldruckparameter 7 können hierbei entweder unmittelbar aufeinander folgen oder beabstandet aufeinander folgen.

Bei einer relativ großen Abweichung zwischen den betrachteten Einzeldruckparametern 7 ist offensichtlich noch eine höhere Regelungsdynamik erforderlich, weshalb bei einer relativ großen Abweichung zwischen den betrachteten Einzeldruckparametern 7 vorzugsweise entweder die Einzeldruckparameter 7 oder der erste Durchschnittswert 8-1 als Regelgröße zu verwenden ist.

Bei einer relativ geringen Abweichung zwischen den betrachteten Einzeldruckparametern 7 ist somit eine geringere Regelungsdynamik ausreichend oder vorteilhaft, weshalb bei einer relativ geringen Abweichung zwischen den betrachteten Einzeldruckparametern 7 entweder der erste Durchschnittswert 8-1 oder möglicherweise sogar der zweite Durchschnittswert 8-2 als Regelgröße zu verwenden ist.

Bezogen auf die Figur 4 bedeutet dies, dass die Abweichungen zwischen aufeinander folgenden ersten Durchschnittswerten 8-1, beispielsweise zwischen dem ersten ersten Durchschnittswert 8-1.1 und dem zweiten ersten Durchschnittswert 8-1.2 bestimmt werden, um die Gleichmäßigkeit der ersten Durchschnittswerte 8-1 zu ermitteln. Die zur Ermittlung der Differenz herangezogenen ersten Durchschnittswerte 8-1 können hierbei entweder unmittelbar aufeinander folgen oder beabstandet aufeinander folgen.

Bei einer relativ großen Abweichung zwischen den betrachteten ersten Durchschnittswerten 8-1 ist offensichtlich noch eine höhere Regelungsdynamik erforderlich, weshalb bei einer relativ großen Abweichung zwischen den betrachteten ersten Durchschnittswerten 8-1 vorzugsweise entweder wieder die Einzeldruckparameter 7 oder der erste Durchschnittswert 8-1 als Regelgröße zu verwenden ist.

Bei einer relativ geringen Abweichung zwischen den betrachteten ersten Durchschnittswerten 8-1 ist somit in der Regel eine geringe Regelungsdynamik ausreichend oder vorteilhaft, weshalb bei einer relativ geringen Abweichung zwischen den betrachteten ersten Durchschnittswerten 8-1 entweder der erste Durchschnittswert 8-1 oder vorteilhafterweise der zweite Durchschnittswert 8-2 als Regelgröße zu verwenden ist.

Bezogen auf die Figur 5 bedeutet dies, dass die Abweichungen zwischen aufeinander folgenden zweiten Durchschnittswerten 8-2, beispielsweise zwischen dem ersten zweiten Durchschnittswert 8-2.1 und dem zweiten zweiten Durchschnittswert 8-2.2 bestimmt werden, um die Gleichmäßigkeit der zweiten Durchschnittswerte 8-2 zu ermitteln. Die zur Ermittlung der Differenz herangezogenen zweiten Durchschnittswerte 8-2 können hierbei entweder unmittelbar aufeinander folgen oder beabstandet aufeinander folgen.

Bei einer relativ großen Abweichung zwischen den betrachteten zweiten Durchschnittswerten 8-2 ist offensichtlich noch eine höhere Regelungsdynamik erforderlich, weshalb bei einer relativ großen Abweichung zwischen den betrachteten zweiten Durchschnittswerten 8-2 vorzugsweise entweder wieder die Einzeldruckparameter 7 oder der erste Durchschnittswert 8-1 als Regelgröße zu verwenden ist.

Bei einer relativ geringen Abweichung zwischen den betrachteten zweiten Durchschnittswerten 8-2 ist somit eine geringe Regelungsdynamik ausreichend, weshalb bei einer relativ geringen Abweichung zwischen den betrachteten zweiten Durchschnittswerten 8-2 der zweite Durchschnittswert 8-2 als Regelgröße zu verwenden ist.

### Bezugszeichenliste

- 1: Druckmaschine
- 2: Druckexemplar
- 3: Substratbahn
- 4: Erfassungseinrichtung
- 5: Erfassungsbereich
- 6: Druckmarke
- 7: Einzeldruckparameter
- 8: Durchschnittswert

- LR: Laufrichtung
- t: Zeit
- n: Anzahl

- A: Anfahr- und Einrichtbereich
- B: Hochfahrbereich
- C: Fortdruckbereich
- D: Auslaufbereich

## Patentansprüche

1. Verfahren zum Inline-Regeln eines Druckparameters, wobei zum Regeln des Druckparameters in nacheinander produzierten Druckexemplaren (2) und/oder bei einer jeden Druckzylinderüberrollung in einem jeden Erfassungsbereich (5) eine Druckmarke (6) mittels einer Erfassungseinrichtung (4) erfasst und von jeder erfassten Druckmarke (6) jeweils ein Einzeldruckparameter (7) ermittelt wird, wobei als Regelgröße entweder jeder Einzeldruckparameter (7) oder ein erster Durchschnittswert (8-1) aus einer ersten Anzahl n1 von Einzeldruckparametern (7) oder ein zweiter Durchschnittswert (8-2) aus einer zweiten Anzahl n2 von Einzeldruckparametern (7) verwendet wird, **dadurch gekennzeichnet, dass** während einer Druckproduktion als Regelgröße zwischen dem Einzeldruckparameter (7) und dem ersten Durchschnittswert (8-1) und/oder dem zweiten Durchschnittswert (8-2) und/oder zwischen dem ersten Durchschnittswert (8-1) und dem zweiten Durchschnittwert (8-2) gewechselt wird.

2. Verfahren nach Anspruch 1, **dadurch gekennzeichnet, dass** zwischen dem Einzeldruckparameter (7) und dem ersten Durchschnittswert (8-1) und/oder dem zweiten Durchschnittswert (8-2) und/oder zwischen dem ersten Durchschnittswert (8-1) und dem zweiten Durchschnittwert (8-2) in Abhängigkeit von einem Betriebszustand der Druckmaschine (1) gewechselt wird.

3. Verfahren nach Anspruch 1, **dadurch gekennzeichnet, dass** zwischen dem Einzeldruckparameter (7) und dem ersten Durchschnittswert (8-1) und/oder dem zweiten Durchschnittswert (8-2) und/oder zwischen dem ersten Durchschnittswert (8-1) und dem zweiten Durchschnittwert (8-2) in Abhängigkeit von der Zeit und/oder einer getätigten Überrollungsanzahl der Druckmaschine (1) gewechselt wird.

4. Verfahren nach einem der Ansprüche 1 bis 3, **dadurch gekennzeichnet, dass** ausschließlich und/oder zusätzlich abhängig von einer Abweichung zwischen dem ersten Einzeldruckparameter (7.1) und dem zweiten Einzeldruckparameter (7.2) oder abhängig von einer Abweichung zwischen dem ersten ersten Durchschnittswert (8-1.1) und dem zweiten ersten Durchschnittswert (8-1.2) und/oder abhängig von einer Abweichung zwischen einem ersten zweiten Durchschnittswert (8-2.1) und einem zweiten zweiten Durchschnittswert (8-2.2) gewechselt wird.

5. Verfahren nach einem der Ansprüche 1 bis 4, **dadurch gekennzeichnet, dass** als Druckparameter eine Farbdichte verwendet wird.

6. Verfahren nach einem der Ansprüche 1 bis 4, **dadurch gekennzeichnet, dass** als Druckparameter ein Farbregisterwert verwendet wird.

7. Verfahren nach einem der Ansprüche 1 bis 4, **dadurch gekennzeichnet, dass** als Druckparameter ein Schnittregisterwert verwendet wird.
